# EUROPÄISCHE PATENTSCHRIFT

(11) **EP 3 049 757 B1**
(45) Veröffentlichungstag und Bekanntmachung des Hinweises auf die Patenterteilung: **11.11.2020**
(21) Anmeldenummer: 14761895.3
(22) Anmeldetag: 11.09.2014
(51) Int. Cl.: G01B 11/275, G06T 7/00

(54) **FAHRWERKSVERMESSUNG BEI UMGEBUNGSLICHT**
CHASSIS MEASUREMENT UNDER AMBIENT LIGHT
MESURE DE CHÂSSIS EN PRÉSENCE DE LUMIÈRE AMBIANTE

(30) Priorität: 26.09.2013 DE 102013219462
(43) Veröffentlichungstag der Anmeldung: 03.08.2016
(73) Patentinhaber: Beissbarth GmbH, 80993 München (DE)
(72) Erfinder: BUX, Hermann, 86559 Adelzhausen (DE)
(74) Vertreter: Schmitt-Nilson Schraud Waibel Wohlfrom Patentanwälte Partnerschaft mbB
(86) Internationale Anmeldenummer: PCT/EP2014/069426
(87) Internationale Veröffentlichungsnummer: WO 2015/043978

(56) Entgegenhaltungen:
- US-A- 6 064 750
- US-A1- 2004 246 470
- US-A1- 2007 124 949
- US-A1- 2013 050 710

## Beschreibung

### Beschreibung

Die vorliegende Erfindung betrifft eine Vorrichtung und ein Verfahren zur Fahrwerksvermessung, insbesondere zur Vermessung der Stellung der Räder von Kraft- und Nutzfahrzeugen, bei Umgebungslicht, insbesondere ohne künstliche Beleuchtung.

### Stand der Technik

Bei den bisher bekannten Vorrichtungen zur Vermessung der Stellung von Kfz-Rädern, wie sie z.B. aus DE 10 2010 039 246 A1 und DE 10 2009 029 241 A1 bekannt sind, werden mit Messmarken versehene Messobjekte, sogenannte Targets, mit Hilfe spezieller Adapter an den Rädern des Fahrzeugs befestigt. Die an den Rädern angebrachten Targets werden durch eine Beleuchtungsvorrichtung mit Lichtblitzen oder Dauerlicht künstlich beleuchtet und Bilder der Targets werden von Kameras (meist 3D-Stereokameras) aufgenommen. Unter Verwendung spezieller Bildverarbeitungsalgorithmen, wie beispielsweise Konturanalyse, Ellipsenfitting oder Schwerpunktbestimmung der Marken auf den Targets, werden die Stellungen der Targets und somit auch die Stellungen der Räder im Raum ermittelt (siehe z.B. DE 10 2008 042 024 A1). Durch die künstliche Beleuchtung der Targets während der Messung werden die Einflüsse des wechselnden Umgebungslichtes weitgehend eliminiert.

Die künstliche Beleuchtung der zu vermessenden Objekte führt durch einen zusätzlichen hardwaretechnischen Aufwand an Leuchtdioden, Laser, Lampen und/oder Projektoren zu höheren Herstellungskosten der Vermessungsanlage.

Um das Nutz-/Störlichtverhältnis zwischen der künstlichen Beleuchtung und des Umgebungslichtes zu verbessern, werden die Marken auf den Targets häufig aus einer reflektierenden Folie oder aus reflektierender Farbe (retroreflektive Marken) gefertigt, was gegenüber einem mit normaler Farbe bedruckten Target höhere Herstellungskosten zur Folge hat.

US 2007/124949 A1 offenbart ein Verfahren und eine Vorrichtung zur Radausrichtung mit mindestens einer Kamera zum Erfassen von Bildern der Räder eines Fahrzeugs, und einem zugeordneten Lichtprojektor, der ausgebildet ist, ein Bildmuster auf die Oberflächen von Fahrzeugkomponenten, wie z.B. Fahrzeugräder, zu projizieren. Bilder des von der Kamera erfassten projizierten Musters werden vom Fahrzeugradausrichtungssystem verarbeitet, um eine Bestimmung der relativen Ausrichtung und Position der Oberflächen, wie z.B. Fahrzeugrädern im dreidimensionalen Raum zu ermöglichen, aus denen Fahrzeugparameter, wie z.B. die Radausrichtung, bestimmt werden können.

US 2004/246470 A1 beschreibt ein Bildaufnahmesystem zum Berechnen von Fahrzeugrad-Ausrichtungen mit einer Detektoranordnung zum Aufnehmen eines Eingangsbildes, das Fahrzeugrad-Ausrichtungsinformationen enthält. Eine Bildsensor-Steuerung steuert die Detektoranordnung, um während einer Erfassungsperiode ein Eingangsbild aufzunehmen. Die Bildsensorsteuerung untersucht zu einer Vielzahl von Zeitpunkten während des Erfassungszeitraums Signale von der Detektoranordnung, um die Belichtung der Bilddetektorelemente zu bestimmen. Ein Ausgangsbild, das von den Bilddetektorelementen am Ende der Erfassungsperiode ausgegeben wird, enthält Radausrichtungsinformationen, die zur Berechnung der Radausrichtung der Fahrzeugs verwendet werden.

US 6 064 750 A beschreibt eine Vorrichtung und ein Verfahren zum Bestimmen der Ausrichtung eines Rads eines Fahrzeugs umfassend die Montage eines bekannten optischen Targets an einem Rad des Fahrzeugs. Dabei hat das bekannte optische Target eine Vielzahl von optischen Elementen. Jedes optische Element hat mindestens eine gerade Kante, die auf einem Hintergrund angeordnet ist. Das Verfahren umfasst, wenigstens ein Bild des optischen Targets aufzunehmen, aus dem Bild des optischen Targets die Eigenschaften einer Vielzahl von Linien, die Projektionen der geraden Kanten der optischen Elemente sind, zu bestimmen und daraus die Ausrichtung des Rades zu bestimmen.

US 2013/050710 A1 beschreibt eine Informationserfassungsvorrichtung, die umfasst: ein optisches Projektionssystem, das Laserlicht mit einem vorbestimmten Punktmuster auf einen Zielbereich projiziert; ein lichtempfangendes optisches System, das in einem vorgegebenen Abstand zu dem optischen Projektionssystem ausgerichtet ist und ein Bildaufnahmeelement zum Aufnehmen eines Bildes des Zielbereichs aufweist; einen Korrekturabschnitt, der ein aufgenommenes Bild des Zielbereichs in mehrere Korrekturbereiche teilt, und Korrigieren eines Pixelwerts eines Pixels in dem Korrekturbereich unter Verwendung eines minimalen Pixelwertes aller Pixelwerte der Pixel in dem Korrekturbereich, um eine korrigiertes Bild zu erzeugen; und einen Informationserfassungsabschnitt.

Es ist daher eine Aufgabe der Erfindung, eine kostengünstige Vorrichtung und ein kostengünstiges Verfahren zur Fahrzeugvermessung zur Verfügung zu stellen, bei denen insbesondere auf eine künstliche Beleuchtung und retroreflektive Marken verzichtet werden kann.

### Offenbarung der Erfindung

Ein erfindungsgemäßes Verfahren zur Fahrzeugvermessung, insbesondere zur Ermittlung der Winkelstellung wenigstens eines Rades eines Fahrzeuges, umfasst die Schritte: Aufnehmen von Bilder, wobei die aufgenommenen Bilder die Abbildung wenigstens einer Marke enthalten, die in einer festen geometrischen Beziehung zu wenigstens einem Rad des Fahrzeugs steht; und Bestimmen der Winkelstellung des wenigstens einen Rades durch Auswerten der von der wenigstens einen Messvorrichtung aufgenommenen Bilder, wobei das Auswerten der Bilder umfasst, neben den Abbildungen der wenigstens einen Marke auch die Beleuchtungsintensität eines die jeweilige Marke umgebenden Hintergrundbereiches auszuwerten und Bilder von Marken, deren die jeweilige Marke unmittelbar umgebender Hintergrundbereich eine inhomogene Beleuchtungsintensität aufweist, bei der weiteren Auswertung nicht zu berücksichtigen, oder die Intensitätsverteilung von Bildern der Marken, deren unmittelbar umgebender Hintergrundbereich eine inhomogene Beleuchtungsintensität aufweist, in Abhängigkeit von der inhomogenen Beleuchtungsintensität des unmittelbar umgebenden Hintergrundbereiches zu korrigieren, wobei innerhalb überbelichteter Bereiche der Marken fehlende Information der Intensitätsverteilung rechnerisch durch die Intensitätsverteilung der unmittelbaren angrenzenden Umgebung ergänzt wird, und die korrigierten Bilder bei der weiteren Auswertung zu berücksichtigen.

Eine erfindungsgemäße Vorrichtung zur Fahrzeugvermessung, insbesondere zur Ermittlung der Winkelstellung wenigstens eines Rades eines Fahrzeuges, hat wenigstens eine Messvorrichtung mit wenigstens einer Bildaufnahmevorrichtung, die zur Aufnahme von Bildern ausgebildet ist, wobei die aufgenommenen Bilder die Abbildung wenigstens einer Marke, die in einer festen geometrischen Beziehung zu wenigstens einem Rad des Fahrzeugs steht, enthalten; und eine Auswerteeinheit, die ausgebildet ist, durch Auswerten der von der wenigstens einen Messvorrichtung aufgenommenen Bilder die Winkelstellung des wenigstens einen Rades (15, 16) zu bestimmen. Dabei ist die Auswerteeinheit ausgebildet, neben der Abbildung der wenigstens einen Marke auch die Beleuchtungsintensität eines die jeweilige Marke unmittelbar umgebenden Hintergrundbereiches auszuwerten und Bilder von Marken, deren die jeweilige Marke unmittelbar umgebender Hintergrundbereich eine inhomogene Beleuchtungsintensität aufweist, bei der weiteren Auswertung nicht zu berücksichtigen, oder die Intensitätsverteilung von Bildern der Marken, deren unmittelbar umgebender Hintergrundbereich eine inhomogene Beleuchtungsintensität aufweist, in Abhängigkeit von der inhomogenen Beleuchtungsintensität des unmittelbar umgebenden Hintergrundbereiches zu korrigieren, wobei innerhalb überbelichteter Bereiche der Marken fehlende Information der Intensitätsverteilung rechnerisch durch die Intensitätsverteilung der unmittelbaren angrenzenden Umgebung ergänzt wird, und die korrigierten Bilder bei der weiteren Auswertung zu berücksichtigen.

Problematisch bei einer Vermessung bei Umgebungslicht, d.h. ohne eine definierte künstliche Beleuchtung, ist, dass die Beleuchtungssituation der Marken am Rad ausschließlich von den wechselnden und häufig nicht kontrollierbaren Umgebungslichtbedingungen abhängt.

Zwar kann Grundhelligkeit der Bildaufnahme über die Blendeneinstellung und/oder über die Belichtungszeit der Kamera verändert werden, was für die Auswertung eines annähernd homogen beleuchteten Targets ausreichend ist, doch werden in der Praxis die Targets, beispielsweise durch partielle Sonneneinstrahlung, häufig inhomogen beleuchtet, d.h. ein Teil eines Targets ist direkter Lichteinstrahlung ausgesetzt, während ein anderer Teil des Targets im Schatten liegt. Somit gibt es je nach Einstellung der Kamerablende und der Belichtungszeit innerhalb des aufgenommenen Bildes gleichzeitig normal belichtete Bereiche und über- oder unterbelichtete Bereiche.
Stark unterbelichtete Bereiche innerhalb des Targets können nicht ausgewertet werden, da die Marken in diesen Bereichen nicht ausreichend sichtbar sind. Überbelichtete Bereiche führen dazu, dass die Kanten der Marken im Bild durch Übersteuerungseffekte der Kamera (z.B. den sogenannten "Blooming Effekt") oder unterschiedliche Beleuchtungsintensität innerhalb der Bildaufnahme verschoben werden und/oder dass ein zur Kantendetektion notwendiger Grauverlauf im überbelichteten Bereich nicht mehr vorhanden ist, was zu Fehlern in der Auswertung führt. Zudem geht im überbelichteten Bereich der Marken die Information der Intensitätsverteilung innerhalb der Marke verloren.

Ein weiteres Problem bei der Vermessung bei Umgebungslicht stellt das Auffinden der Targets innerhalb des Bildes dar. Bei Verfahren mit künstlicher Beleuchtung und retroreflektiven Marken wird der Hintergrund der Targets weitgehend ausgeblendet, was das Auffinden der Marken im Bild wesentlich vereinfacht. Im Gegensatz hierzu müssen bei der Vermessung mit Umgebungslicht die Targets innerhalb eines Bildes mit sehr komplexem Inhalt, das einem Foto vergleichbar ist, aufgefunden und extrahiert werden.
Diese Probleme werden durch ein erfindungsgemäßes Verfahren zur Auswertung der aufgenommenen Bilder der Targets und eine Vorrichtung, die ein erfindungsgemäßes Verfahren ausführt, gelöst. Der Schutzumfang der Erfindung ist in den Ansprüchen 1 bis 10 definiert.
Um Messfehler zu vermeiden, werden in einer ersten Ausführungsform eines erfindungsgemäßen Verfahrens lediglich die Abbildungen von Marken durch die Bildverarbeitung ausgewertet, die im aufgenommenen Bild entweder homogen "normal" belichtet oder homogen überbelichtet sind. Marken, die inhomogen belichtet sind, insbesondere Marken, die an einer Licht/Schattengrenze liegen, werden dagegen von der Auswertung ausgeschlossen, da ihre Kontur und/oder ihr optischer Schwerpunkt durch die oben beschriebenen Kameraeffekte und die ungleichmäßige Beleuchtung verschoben sind. Um die Marken zu bestimmen, die für eine Auswertung zur Fahrwerksvermessung geeignet sind, wird die unmittelbare Umgebungshelligkeit der einzelnen Marke analysiert und bewertet.
Bei der Anwendung dieses Ausschlussverfahrens ist es sinnvoll, dass eine möglichst hohe Zahl an Marken auf den Targets ausgebildet ist, damit auch nach dem Ausschluss der inhomogen belichteten Marken eine ausreichende Anzahl an Marken mit homogener Belichtung oder homogener Überbelichtung für die weitere Auswertung verbleibt. Eine einzelne große Marke, z.B. ein Ringtarget, wäre dagegen schon bei einem einzigen Licht-Schattenverlauf auf dem Target nicht mehr fehlerfrei auswertbar.

Aus diesem Grund werden bei diesem Verfahren vorzugsweise Targets mit einer möglichst hohen Anzahl an Marken verwendet. Die Gestaltung der Targets und die Anzahl der Marken hängen weitgehend von der Messaufgabe ab. Hier muss ein Kompromiss aus einer möglichst hohen Anzahl an Marken (z.B. Punkten) und der Auflösung (Erkennbarkeit) der Marken selbst bei Unter- oder Überbelichtung eingegangen werden. Zudem müssen die Marken einen ausreichenden Abstand voneinander besitzen, damit die Hintergrundintensität auch in der unmittelbaren Umgebung der Marken analysiert und ausgewertet werden kann.

In einer zweiten Ausführungsform werden auch die Bilder inhomogen beleuchteter Marken in die Auswertung miteinbezogen. Hierfür wird die Intensitätsverteilung der Marken in Abhängigkeit von der Intensitätsverteilung des Markenhintergrundes rechnerisch rekonstruiert.

In dieser zweiten Ausführungsform können alle sichtbaren Marken in Abhängigkeit der Hintergrundintensität des sie umgebenden Bereichs rekonstruiert und in die Auswertung mit einbezogen werden, wobei die innerhalb der überbelichteten Bereiche der Marken fehlende Information der Intensitätsverteilung rechnerisch durch die Intensitätsverteilung der unmittelbaren angrenzenden Umgebung ergänzt wird. Dadurch werden die Kontur und der optische Schwerpunkt derart korrigiert, dass diese im Wesentlichen den Werten einer korrekt belichteten Marke entsprechen.

Die zweite Ausführungsform weist folgende Vorteile auf:
- Gegenüber dem Ausschlussprinzip der ersten Ausführungsform werden bei gleichem Target insgesamt mehr Marken ausgewertet, was wiederum die Messgenauigkeit erhöht
- Bei gleicher Größe des Targets können weniger, aber dafür größere Marken verwendet werden, was aufgrund der besseren Auflösung der Marken im Bild ebenfalls zu einer Verbesserung der Messgenauigkeit beiträgt.
- Bei gleicher Markengröße kann die Anzahl der Marken gegenüber dem Ausschlussverfahren reduziert werden, so dass die Targets kleiner, leichter und kostengünstiger ausgebildet werden können.

Für die Rekonstruktion der Marken kann nicht nur die unmittelbare Intensität des umgebenden Hintergrundes selbst, sondern auch der Kurvenverlauf der Intensität, ausgehend vom Hintergrund bis hin zur Überbelichtungsgrenze der Marke, verwendet werden.

In einer Ausführungsform ist wenigstens ein an einem Rad des Fahrzeugs montierbares Messtarget vorgesehen, wobei auf dem wenigstens einen Messtarget wenigstens eine Marke ausgebildet ist. Montierbare Messtargets stellen ein einfaches und kostengünstiges Mittel bereit, um die für die Fahrzeugvermessung benötigten Messmarken zur Verfügung zu stellen.

In einer Ausführungsform ist die wenigstens eine Marke auf dem wenigstens einen Messtarget in einer matten, diffus reflektierenden Farbe und/oder mit einer matten, diffus reflektierenden Oberflächenstruktur ausgebildet. Derartige Marken sind besonders kostengünstig, insbesondere kostengünstiger als retroreflektive Marken, herstellbar.

In einer Ausführungsform ist wenigstens eine optische Projektionsvorrichtung vorgesehen, die ausgebildet ist, wenigstens eine Marke auf das Fahrzeug, insbesondere auf wenigstens ein Rad des Fahrzeugs, zu projizieren. Auf diese Weise können auf einfache und bequeme Weise Marken auf dem Rad des Fahrzeugs erzeugt werden, und der mit der Montage und Demontage an den Reifen montierbarer Messtargets verbundene Aufwand kann vermieden werden. Im Ergebnis kann die Fahrzeugvermessung schneller und kostengünstiger durchgeführt werden.

In einer Ausführungsform weist wenigstens eine Marke eine optisch markante Begrenzung auf. Durch eine optisch markante Begrenzung der Marke wird es dem Algorithmus zum Auswerten der von der wenigstens einen Messvorrichtung aufgenommenen Bilder erleichtert, die Marken innerhalb des Bildes eindeutig zu identifizieren.

In einer Ausführungsform umfasst das Verfahren, die Beleuchtungsintensität wenigstens eines ersten aufgenommenen Bildes zu analysieren und wenigstens ein weiteres Bild aufzunehmen, wobei die Belichtungszeit und/oder Blende bei der Aufnahme des wenigstens einen weiteren Bildes so angepasst wird, dass in dem wenigstens einen weiteren aufgenommenen Bild die größtmögliche Anzahl an Marken sichtbar und auswertbar ist. Auf diese Weise kann die Anzahl der für die Auswertung zur Verfügung stehenden Marken vergrößert und in der Folge die Qualität der Ergebnisse der Fahrzeugvermessung verbessert werden.

### Figurenbeschreibung

Die Erfindung wird im Folgenden anhand der beigefügten Figuren näher erläutert, dabei zeigt:
Figur 1 eine Draufsicht auf ein erstes Ausführungsbeispiel einer erfindungsgemäßen Vorrichtung zur Fahrzeugvermessung;
Figur 2 eine perspektivische seitliche Ansicht der in Figur 1 gezeigten Vorrichtung zur Fahrzeugvermessung;
Figur 3 eine Draufsicht auf ein zweites Ausführungsbeispiel einer erfindungsgemäßen Vorrichtung zur Fahrzeugvermessung;
Figur 4 eine Bildaufnahme eines Targets mit Marken bei Umgebungshelligkeit; und
Figur 5 den Intensitätsverlauf entlang der Schnittlinie A-B aus Figur 4.

Ein Ausführungsbeispiel der Erfindung wird im Folgenden unter Bezugnahme auf die beigefügten Figuren beschrieben.

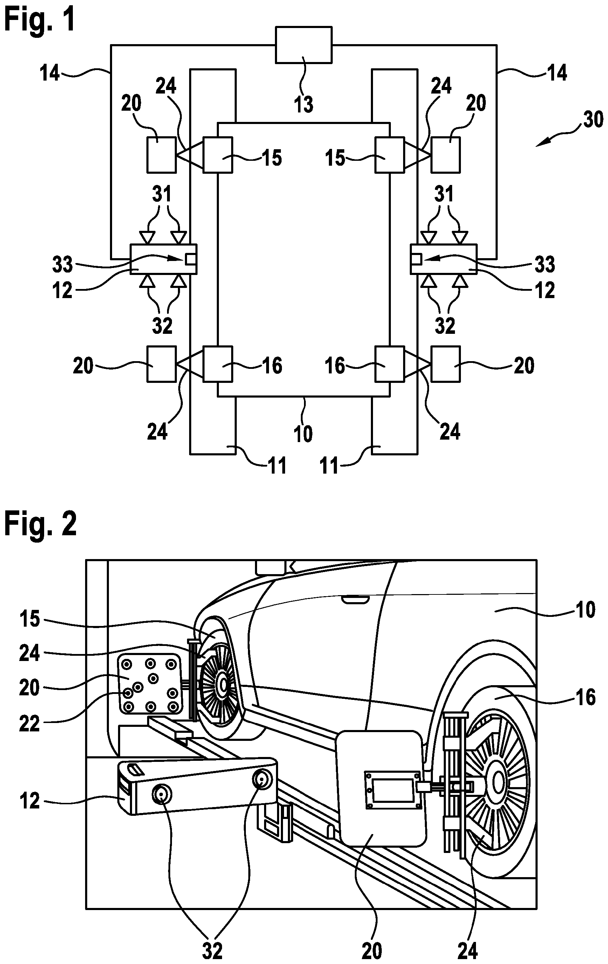

Die Figuren 1 und 2 zeigen jeweils eine Vorrichtung 30 zur Fahrzeugvermessung mit einem Messsystem und einem Fahrzeug 10 auf einer Hebebühne mit zwei Fahrschienen 11 in der Draufsicht (Figur 1) und in einer seitlichen Ansicht (Figur 2).

Messtafeln ("Targets") 20 sind mit Hilfe von Adaptern 24 an jeweils einem zugeordneten Fahrzeugrad 15, 16 befestigt. Die Messtafeln 20 besitzen eine im Wesentlichen ebene Fläche, die im Wesentlichen in einem rechten Winkel zur Längserstreckung des Fahrzeugs 10 ausgerichtet ist und auf der Marken 22 als optisch registrierbare Markierungen (Messmarken) ausgebildet sind.

Die Messvorrichtung 30 umfasst auch zwei Bildaufnahmeeinrichtungen 12 mit jeweils vier Messkameras 31, 32 und mit jeweils einer Referenzierungseinrichtung 33 sowie eine Auswerteeinheit 13, die wenigstens eine Rechen- und Speichereinheit u.a. zur Abarbeitung einer Bildverarbeitungssoftware besitzt.

Die beiden Bildaufnahmeeinrichtungen 12 sind jeweils seitlich von den beiden Fahrschienen 11 angeordnet und stehen über Datenleitungen 14 oder drahtlos mit der Auswerteeinheit 13, die zur Datenverarbeitung ausgebildet ist, in Verbindung. Die beiden Bildaufnahmeeinrichtungen 12 sind jeweils mit zwei Stereo-Kamerasystemen ausgestattet, die aus jeweils zwei Messkameras 31, 32 gebildet sind. Die nach vorn ausgerichteten Stereo-Kamerasysteme mit den Messkameras 31 erfassen die an den Vorderrädern 15 angeordneten Messtafeln 20. Die nach hinten ausgerichteten Stereo-Kamerasysteme mit den beiden Messkameras 32 erfassen die an den Hinterrädern 16 angeordneten Messtafeln 20. Jede Bildaufnahmeeinrichtung 12 umfasst ferner die Referenzierungseinrichtung 33. Die beiden Bildaufnahmeeinrichtungen 12 sind im dargestellten Messsystem so ausgerichtet, dass die beiden Referenzierungseinrichtungen 33 einander zugewandt sind, so dass durch einen Referenzierungsvorgang ein Messplatzbezugssystem für die Bildaufnahmeeinrichtungen 12 festgelegt werden kann, welches der Auswerteeinheit 13 übermittelt wird.

Anstelle einer zentralen Auswerteeinheit 13 kann in einem alternativen, in den Figuren nicht gezeigten Ausführungsbeispiel jede Bildaufnahmeeinrichtung 12 und/oder jede der Messkameras 31, 32 und jede Referenzierungseinrichtung 33 eine eigene Rechen- und Speichereinheit besitzen, die als Auswerteeinheit 13 dient, wobei dann die einzelnen Auswerteeinheiten zum Datenaustausch miteinander verbunden sind.

Die Aufnahme der Bilder der Messtafeln 20 kann bei stehendem Fahrzeug 10 oder während der Bewegung des Fahrzeugs 10 erfolgen. Aus den Bildaufnahmen werden unter Verwendung spezieller Algorithmen in der Auswerteeinheit 13 die Position und die Winkelstellungen der jeweiligen Fahrzeugräder 15, 16 im Raum und basierend darauf die Fahrwerksgeometrie berechnet.

Ein Beispiel für ein mögliches Verfahren zur Fahrzeugvermessung mit dem in den Figuren 1 und 2 dargestellten Messsystem wird in DE 10 2008 042 024 A1 beschrieben.

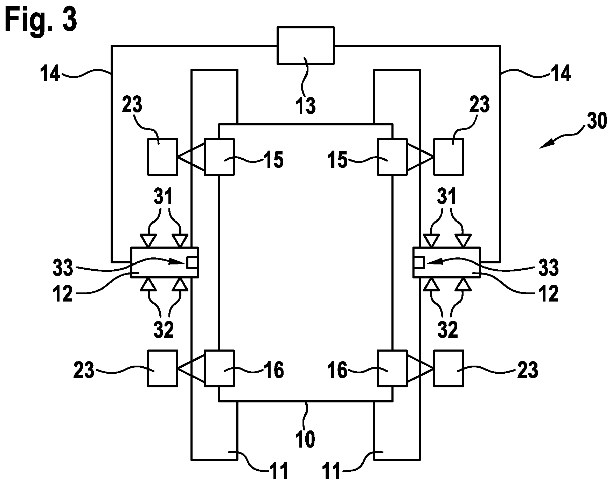

Anstelle der oder zusätzlich zu den mit Marken 22 versehenen Messtafeln 20 kann auch wenigstens eine Projektionsvorrichtung 23 vorgesehen sein, die ausgebildet ist, wenigstens eine optische Marke auf das Fahrzeug 10, insbesondere auf wenigstens ein Rad 15, 16 des Fahrzeugs, zu projizieren, wie in der Figur 3 gezeigt. In diesem Fall sind die Kameras 31, 32 geeignet ausgerichtet, um Bilder der von der Projektionsvorrichtung 23 auf die Räder 15, 16 projizierten Marken aufnehmen zu können. Die weiteren Merkmale der in der Figur 3 gezeigten Vorrichtung 30 entsprechen den in den Figuren 1 und 2 gezeigten Merkmalen; sie sind daher mit denselben Bezugszeichen versehen und werden nicht erneut im Detail beschrieben.

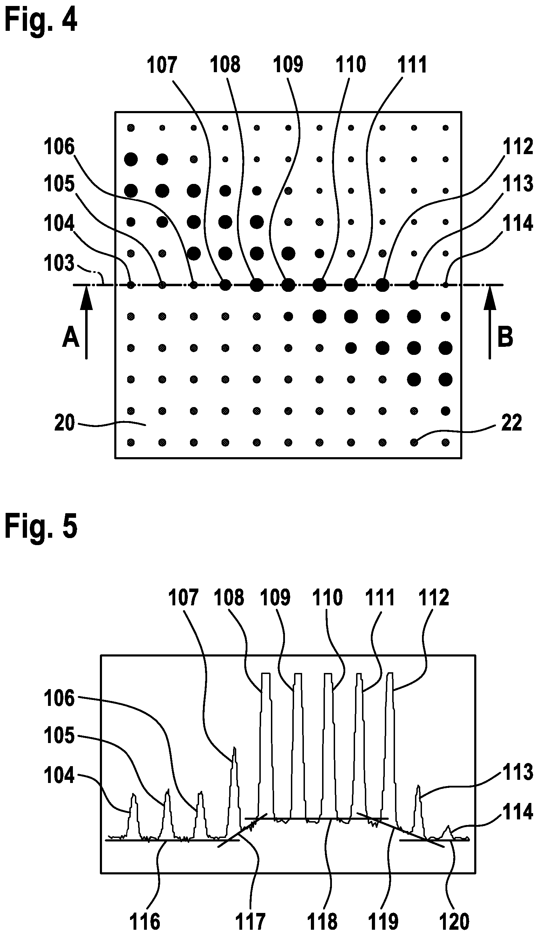

Figur 4 zeigt beispielhaft das bei Umgebungshelligkeit aufgenommene Bild einer Messtafel 20 mit Marken 22, wobei die Messtafel 20 durch partielle Sonneneinstrahlung inhomogen beleuchtetet ist. In das Bild der Messtafel 20 ist eine Schnittlinie A-B 103 eingezeichnet, die durch die Marken 104 - 114 läuft.

Figur 5 zeigt den Intensitätsverlauf entlang der Schnittlinie A-B aus Figur 4 über die Marken 104 - 114 als zweidimensionales Diagramm (Histogramm).

Die in das in der Figur 5 gezeigte Histogramm eingezeichneten Geraden 116, 117, 118, 119 und 120 veranschaulichen in linearer Näherung Gradienten der Hintergrundintensität im Bereich der jeweiligen Marke 104 - 114.

In dem in den Figuren 4 und 5 gezeigten Beispiel ist deutlich zu erkennen, dass die Marken 108, 109, 110 und 111 innerhalb des Bereiches der Sonneneinstrahlung aufgrund der höheren Intensität und der Überbelichtungseffekte der Kamera 31, 32 größer dargestellt werden als die Marken in den Bereichen indirekter Beleuchtung. Auch die überbelichteten Marken 108, 109, 110, 111 behalten jedoch ihre Kontur und ihren optischen Schwerpunkt, da sie weitgehend gleichmäßig überbelichtet sind. Daher können auch die überbelichteten Marken 108, 109, 110, 111 für die folgende Auswertung zur Fahrwerksvermessung verwendet werden.

Bei den Marken 107, 112 und 113, die sich im unmittelbaren Übergangsbereich zwischen dem Bereich der Sonneneinstrahlung und dem Schatten befinden, ist dagegen der optische Schwerpunkt ihres Abbildes verschoben, da sich das Intensitätsmaximum der Bilder der Marken 107, 112, 113 aufgrund der ungleichmäßigen Beleuchtung nicht mehr im Zentrum der jeweiligen Marke 107, 112, 113 befindet. Dieser Effekt wirkt sich als Fehler bei Auswerteverfahren mit Kontur- oder Intensitätsschwerpunktanalyse der Marken aus.

In dem in der Figur 5 gezeigten Histogramm ist dieser Effekt deutlich zu erkennen:
Bei den Marken 104, 105, 106, 108, 109, 110, 111 und 114 ist zu erkennen, dass die jeweils zugehörigen Geraden 116, 118, 120 der Hintergrundintensität nahezu waagerecht, d.h. die Gradienten der Hintergrundintensität nahezu Null sind. Die Marken 104, 105, 106, 108, 109, 110, 111, 114 können daher in die Auswertung einbezogen werden, obwohl die Bilder der Marken 108, 109, 110 und 111 überbelichtet sind.

Bei den Bildern der Marken 107, 112 und 113 hingegen sind die zugehörigen Geraden 117 und 119 steigend bzw. fallend, d.h. ihre Gradienten sind ungleich Null. Bei den Marken 107, 112, 113 ist daher der optische Schwerpunkt ihrer Abbildung aufgrund der ungleichmäßigen Beleuchtung verschoben. Dies gilt insbesondere für die zusätzlich auch überbelichtete Marke 112. Die Marken 107, 112 und 113 werden daher bei der Auswertung nicht berücksichtigt.

In den Figuren 4 und 5 ist zur besseren Veranschaulichung lediglich ein einziger Schnitt A-B über die Marken 104-114 gezeigt. Die Bewertung der Intensität des Bildhintergrundes muss jedoch über mehrere Stellen entlang des Umfangs der Marken 104-114, zum Beispiel über eine Vielzahl radialer Schnitten jeder Marke 104-114, erfolgen, dabei sind zur sinnvollen Auswertung der Hintergrundintensität mindestens zwei um 90 Grad gegeneinander versetzte Schnitte notwendig.

Optimal ist eine Auswertung der Hintergrundintensität, bei der die Auswertung der Hintergrundintensität nicht nur an einzelnen Punkten oder Schnitten am Umfang der Marken durchgeführt, sondern diese kontinuierlich (z.B. über mathematische Funktionen) abgebildet und ausgewertet wird.

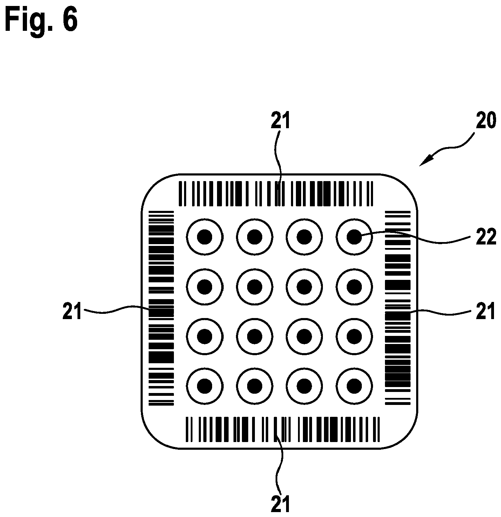

Fig. 6 zeigt ein Beispiel für eine Messtafel 20 mit einer optisch markanten Begrenzung 21. In dem in der Fig. 6 gezeigten Beispiel ist die optisch markante Begrenzung 21 als Barcode ausgebildet und kann auf diese Weise zusätzliche Informationen übertragen und insbesondere die Messtafel 20 eindeutig identifizieren. Die optisch markante Begrenzung 21 kann jedoch auch als einfacher Strich oder ein einfaches Muster ausgebildet sein, das keine zusätzlichen Informationen enthält.

Durch eine optisch markante Begrenzung 21 der Messtafel 20 wird es dem Algorithmus zum Auswerten der von der wenigstens einen Messvorrichtung 30 aufgenommenen Bilder erleichtert, die Messtafel 20 innerhalb des Bildes eindeutig zu identifizieren.

## Patentansprüche

1. Vorrichtung (30) zur Ermittlung der Winkelstellung wenigstens eines Rades (15, 16) eines Fahrzeuges (10), mit
wenigstens einer Messvorrichtung (12) mit wenigstens einer Bildaufnahmevorrichtung (31, 32), die zur Aufnahme von Bildern ausgebildet ist, wobei die aufgenommenen Bilder die Abbildung wenigstens einer Marke (22), die in einer festen geometrischen Beziehung zu einem Rad (15, 16) des Fahrzeuges (10) steht, enthalten, und
einer Auswerteeinheit (13), die ausgebildet ist, durch Auswerten der von der wenigstens einen Messvorrichtung (12) aufgenommenen Bilder die Winkelstellung des wenigstens einen Rades (15, 16) zu bestimmen,
**dadurch gekennzeichnet, dass** die Auswerteeinheit (13) ausgebildet ist, neben der Abbildung der wenigstens einen Marke (22) auch die Beleuchtungsintensität eines die jeweilige Marke (22) unmittelbar umgebenden Hintergrundbereiches auszuwerten und Bilder von Marken (22), deren die jeweilige Marke (22) unmittelbar umgebender Hintergrundbereich eine inhomogene Beleuchtungsintensität aufweist, bei der weiteren Auswertung nicht zu berücksichtigen, oder die Intensitätsverteilung von Bildern der Marken (22), deren unmittelbar umgebender Hintergrundbereich eine inhomogene Beleuchtungsintensität aufweist, in Abhängigkeit von der inhomogenen Beleuchtungsintensität des unmittelbar umgebenden Hintergrundbereiches zu korrigieren, wobei innerhalb überbelichteter Bereiche der Marken (22) fehlende Information der Intensitätsverteilung rechnerisch durch die Intensitätsverteilung der unmittelbaren angrenzenden Umgebung ergänzt wird, und die korrigierten Bilder bei der weiteren Auswertung zu berücksichtigen.

2. Vorrichtung (30) nach Anspruch 1, die zusätzlich wenigstens eine optische Projektionsvorrichtung (23) aufweist, die ausgebildet ist, wenigstens eine Marke (22) auf das Fahrzeug (10), insbesondere auf wenigstens ein Rad (15, 16) des Fahrzeuges (10), zu projizieren.

3. Vorrichtung (30) nach Anspruch 1 oder 2, die zusätzlich wenigstens eine an einem Rad (15, 16) des Fahrzeuges (10) montierbare Messtafel (20) aufweist, wobei auf der wenigstens einen Messtafel (20) wenigstens eine Marke (22) ausgebildet ist.

4. Vorrichtung (30) nach Anspruch 3, wobei die wenigstens eine Marke (22) auf der wenigstens einen Messtafel (20) in einer matten, diffus reflektierenden Farbe und/oder mit einer matten, diffus reflektierenden Oberflächenstruktur ausgebildet ist.

5. Vorrichtung (30) nach einem der Ansprüche 1 bis 4, wobei die wenigstens eine Marke (22) eine optisch markante Begrenzung aufweist.

6. Verfahren zur Ermittlung der Winkelstellung wenigstens eines Rades (15, 16) eines Fahrzeuges (10), mit den Schritten:
Aufnehmen von Bilder, wobei die aufgenommenen Bilder die Abbildung wenigstens einer Marke (22) enthalten, die in einer festen geometrischen Beziehung zu einem Rad (15, 16) des Fahrzeuges (10) steht, und
Bestimmen der Winkelstellung des wenigstens einen Rades (15, 16) durch Auswerten der von der wenigstens einen Messvorrichtung (12) aufgenommenen Bilder,
**dadurch gekennzeichnet, dass** das Auswerten der Bilder umfasst, neben den Abbildungen der wenigstens einen Marke (22) auch die Beleuchtungsintensität eines die jeweilige Marke (22) unmittelbar umgebenden Hintergrundbereiches auszuwerten und Bilder von Marken (22), deren die jeweilige Marke (22) unmittelbar umgebender Hintergrundbereich eine inhomogene Beleuchtungsintensität aufweist, bei der weiteren Auswertung nicht zu berücksichtigen, oder die Intensitätsverteilung von Bildern der Marken (22), deren unmittelbar umgebender Hintergrundbereich eine inhomogene Beleuchtungsintensität aufweist, in Abhängigkeit von der inhomogenen Beleuchtungsintensität des unmittelbar umgebenden Hintergrundbereiches zu korrigieren, wobei innerhalb überbelichteter Bereiche der Marken (22) fehlende Information der Intensitätsverteilung rechnerisch durch die Intensitätsverteilung der unmittelbaren angrenzenden Umgebung ergänzt wird, und die korrigierten Bilder bei der weiteren Auswertung zu berücksichtigen.

7. Verfahren nach Anspruch 6, wobei das Aufnehmen von Bildern umfasst, die Beleuchtungsintensität wenigstens eines ersten aufgenommenen Bildes zu analysieren und wenigstens ein weiteres Bild aufzunehmen, wobei die Belichtungszeit und/oder Blende bei der Aufnahme des wenigstens einen weiteren Bildes so angepasst wird, dass im weiteren aufgenommenen Bild die größtmögliche Anzahl an Marken (22) sichtbar ist.

8. Verfahren nach Anspruch 6 oder 7, wobei das Verfahren einschließt, wenigstens eine Marke (22) optisch auf das Fahrzeug (10), insbesondere wenigstens ein Rad (15, 16) des Fahrzeuges (10), zu projizieren.

9. Verfahren nach einem der Ansprüche 6 bis 8, wobei das Verfahren einschließt, wenigstens eine Messtafel (20), auf der wenigstens eine Marke (22) ausgebildet ist, an wenigstens einem Rad (15, 16) des Fahrzeuges (10) zu montieren.

10. Verfahren nach einem der Ansprüche 6 bis 9, wobei das Verfahren einschließt, die Beleuchtungsintensität der Umgebungsbereiche aller sichtbaren Marken (22) zu analysieren und die Belichtungsintensität aller sichtbaren Marken (22) in Abhängigkeit der Belichtungsintensität ihres jeweiligen Umgebungsbereichs zu korrigieren.

## Claims

1. A device (30) for determining the angular position of at least one wheel (15, 16) of a vehicle (10), comprising:
at least one measuring device (12) including at least one image recording device (31, 32) configured to record images, the recorded images containing an image of at least one mark (22) which has a fixed geometric relationship to a wheel (15, 16) of the vehicle (10), and
an evaluation unit (13) configured to determine the angular position of the at least one wheel (15, 16) by evaluation of the images recorded by the at least one measuring device (12),
**characterized in that** the evaluation unit (13) is configured to evaluate, in addition to the image of the at least one mark (22), also the illumination intensity of a background region directly surrounding the respective mark (22) and to not consider in the further evaluation images of marks (22) the background region of which, directly surrounding the respective mark (22), has an inhomogeneous illumination intensity, or to correct the intensity distribution of images of the marks (22) the directly surrounding background region of which has an inhomogeneous illumination intensity, as a function of the inhomogeneous illumination intensity of the directly surrounding background region, wherein in overexposed regions of the marks (22) missing information of the intensity distribution is supplemented by calculation on the basis of the intensity distribution of the directly adjoining surrounding region, and to consider the corrected images in the further evaluation.

2. The device (30) according to claim 1,
further comprising at least one optical projection device (23) configured to project at least one mark (22) onto the vehicle (10), in particular onto at least one wheel (15, 16) of the vehicle (10).

3. The device (30) according to claim 1 or 2,
further comprising at least one measurement board (20) adapted to be mounted to a wheel (15, 16) of the vehicle (10), wherein the at least one measurement board (20) has at least one mark (22) formed thereon.

4. The device (30) according to claim 3,
wherein the at least one mark (22) on the at least one measurement board (20) is embodied in a muted, diffusely reflecting color and/or a matte diffusely reflecting surface structure.

5. The device (30) according to any of claims 1 to 4,
wherein the at least one mark (22) has an optically pronounced boundary.

6. A method for determining the angular position of at least one wheel (15, 16) of a vehicle (10), comprising the following steps:
recording images, the recorded images containing the image of at least one mark (22) which has a fixed geometric relationship to a wheel (15, 16) of the vehicle (10), and
determining the angular position of the at least one wheel (15, 16) by evaluation of the images recorded by the at least one measurement device (12), **characterized in that** the evaluation of the images comprises, in addition to the images of the at least one mark (22), to evaluate also the illumination intensity of a background region directly surrounding the respective mark (22) and to not consider in the further evaluation images of marks (22) the background region of which, directly surrounding the respective mark (22), has an inhomogeneous illumination intensity, or to correct the intensity distribution of images of the marks (22) the directly surrounding background region of which has an inhomogeneous illumination intensity, as a function of the inhomogeneous illumination intensity of the directly surrounding background region, wherein in overexposed portions of the marks (22) missing information of the intensity distribution is supplemented by calculation on the basis of the intensity distribution of the directly adjoining surrounding region, and to consider the corrected images in the further evaluation.

7. The method according to claim 6,
wherein said recording of images comprises analyzing the illumination intensity of at least one first recorded image and recording at least one further image, with the exposure time and/or aperture in recording the at least one further image being matched in such a way that the greatest possible number of marks (22) is visible in the further recorded image.

8. The method according to claim 6 or 7,
said method further comprising optically projecting at least one mark (22) onto the vehicle (10), in particular onto at least one wheel (15, 16) of the vehicle (10).

9. The method according to any of claims 6 to 8,
said method further comprising mounting at least one measurement board (20), on which the at least one mark (22) is formed, on at least one wheel (15, 16) of the vehicle (10).

10. The method according to any of claims 6 to 9,
said method further comprising analyzing the illumination intensity of the surrounding regions of all visible marks (22) and correcting the illumination intensity of all visible marks (22) as a function of the illumination intensity of the respective surrounding region thereof.

## Revendications

1. Dispositif (30) de détermination de la position angulaire d'au moins une roue (15, 16) d'un véhicule automobile (10), présentant
au moins un dispositif de mesure (12) équipé d'au moins un dispositif de capture d'images (31, 32) réalisé de manière à capturer des images, les images capturées comprenant la représentation d'au moins une marque (22) ayant un rapport géométrique fixe à une roue (15, 16) du véhicule automobile (10), et
une unité d'évaluation (13) réalisée de manière à déterminer la position angulaire de la roue (15, 16), une au moins, par l'évaluation des images capturées par le dispositif de mesure (12), un au moins,
**caractérisé en ce que** l'unité d'évaluation (13) est réalisée de manière à évaluer, outre la représentation de la marque (22), une au moins, également l'intensité d'éclairage d'une zone de fond entourant directement la marque (22) respective et de manière à ne pas tenir compte, pour la suite de l'évaluation, des images de marques (22) dont la zone de fond entourant directement la marque (22) présente une intensité d'éclairage non homogène ou à corriger la répartition de l'intensité d'images de marques (22) dont la zone de fond entourant directement la marque présente une intensité non homogène en fonction de l'intensité d'éclairage non homogène de la zone de fond entourant directement la marque, sachant que dans les zones surexposées des marques (22) les informations manquantes pour la répartition de l'intensité sont complétées par calcul à partir de la répartition de l'intensité de la zone directement avoisinante, et à prendre en compte les images corrigées pour la suite de l'évaluation.

2. Dispositif (30) selon la revendication 1, présentant en outre au moins un dispositif de projection optique (23) réalisé de manière à projeter au moins une marque (22) sur le véhicule automobile (10), en particulier sur au moins une roue (15, 16) du véhicule automobile (10).

3. Dispositif (30) selon la revendication 1 ou 2, présentant en outre au moins une table de mesure (20) montable sur une roue (15, 16) du véhicule automobile (10), sachant qu'au moins une marque (22) est formée sur la table de mesure (20), une au moins.

4. Dispositif (30) selon la revendication 3, dans lequel la marque (22), une au moins, sur la table de mesure (20), une au moins, est formée dans une couleur matte, diffusément réfléchissante et/ou avec une structure de surface matte, diffusément réfléchissante.

5. Dispositif (30) selon l'une quelconque des revendications 1 à 4, dans lequel la marque (22), une au moins, présente une limite marquée sur le plan optique.

6. Procédé de détermination de la position angulaire d'au moins une roue (15, 16) d'un véhicule automobile (10), présentant les étapes suivantes :
capture d'images, les images capturées contenant la représentation d'au moins une marque (22) ayant un rapport géométrique fixe à une roue (15, 16) du véhicule automobile (10), et
détermination de la position angulaire de la roue (15, 16), une au moins, par l'évaluation des images capturées par le dispositif de mesure (12), un au moins,
**caractérisé en ce que** l'évaluation des images implique, outre les représentations de la marque (22), une au moins, également d'évaluer l'intensité d'éclairage d'une zone de fond entourant directement la marque (22) respective et de ne pas tenir compte, pour la suite de l'évaluation, des images de marques (22) dont la zone de fond entourant directement la marque (22) respective présente une intensité d'éclairage non homogène, ou de corriger la répartition de l'intensité d'images de marques (22) dont la zone de fond entourant directement la marque présente une intensité non homogène en fonction de l'intensité d'éclairage non homogène de la zone de fond entourant directement la marque, sachant que dans les zones surexposées des marques (22) les informations manquantes pour la répartition de l'intensité sont complétées par calcul à partir de la répartition de l'intensité de la zone directement avoisinante, et de prendre en compte les images corrigées pour la suite de l'évaluation.

7. Procédé selon la revendication 6, dans lequel la capture d'images implique d'analyser l'intensité d'éclairage d'au moins une première image capturée et de capturer au moins une image supplémentaire, sachant que l'exposition et/ou l'ouverture sont adaptées lors de la capture de l'image supplémentaire, une au moins, de telle sorte que, dans l'image supplémentaire capturée, le plus grand nombre possible de marques (22) soit visible.

8. Procédé selon la revendication 6 ou 7, dans lequel le procédé inclut de projeter au moins une marque (22) de manière optique sur le véhicule automobile (10), en particulier au moins sur une roue (15, 16) du véhicule automobile (10).

9. Procédé selon l'une quelconque des revendications 6 à 8, dans lequel le procédé inclut de monter au moins une table de mesure (20) sur laquelle est formée au moins une marque (22), sur au moins une roue (15, 16) du véhicule automobile (10).

10. Procédé selon l'une quelconque des revendications 6 à 9, dans lequel le procédé inclut d'analyser l'intensité d'éclairage des zones entourant toutes les marques (22) visibles et de corriger l'intensité d'éclairage de toutes les marques (22) visibles en fonction de l'intensité d'éclairage de la zone respective les entourant.
